Europäisches Patentamt

European Patent Office

Office européen des brevets

(11) Veröffentlichungsnummer: **0 043 450**
**A1**

# (12) EUROPÄISCHE PATENTANMELDUNG

(21) Anmeldenummer: 81104331.4

(22) Anmeldetag: 04.06.81

(51) Int. Cl.³: **G 02 B 7/26**

(30) Priorität: **04.07.80 DE 3025492**

(43) Veröffentlichungstag der Anmeldung: **13.01.82**
**Patentblatt 82/2**

(84) Benannte Vertragsstaaten: **FR GB**

(71) Anmelder: **SIEMENS AKTIENGESELLSCHAFT Berlin und München, Postfach 22 02 61, D-8000 München 22 (DE)**

(72) Erfinder: **Mahlein, Hans F., Dr., Queristrasse 2, D-8025 Unterhaching (DE)**

(54) **Filterelement für die optische Nachrichtentechnik.**

(57) Es wird ein Filterelement mit einem Filterglas beschrieben, bei dem zur Erhöhung der Nebensprechdämpfung das Filterglas in Form eines Lichtleiterstabes (3) ausgebildet ist und in dem Licht durch Totalreflexion geführt wird.

EP 0 043 450 A1

0043450

SIEMENS AKTIENGESELLSCHAFT          Unser Zeichen
Berlin und München                  VPA
                                    80 P 7 1 0 3 E

## Filterelement für die optische Nachrichtentechnik

Die vorliegende Erfindung bezieht sich auf ein Filterelement mit einem Filterglas für die optische Nachrichtentechnik.

Bei der optischen Nachrichtenübertragung im Wellenlängenmultiplex sind neben Elementen, welche Wellenlängen räumlich voneinander trennen, zusätzliche Komponenten nötig, die eine hohe Nebensprechdämpfung bewirken.

Es wurde schon vorgeschlagen, zur Verbesserung der Nebensprechdämpfung ein Schmalbandinterferenzfilter zu verwenden, dessen Dämpfung im Sperrbereich typischerweise zwischen 30 und 40 dB liegt.

Aufgabe der vorliegenden Erfindung ist es, ein weiteres zur Erhöhung der Nebensprechdämpfung geeignetes Filterelement aufzuzeigen.

Diese Aufgabe wird dadurch gelöst, daß das Filterglas in Form eines Lichtleiterstabes ausgebildet ist.

Das zu verwendende Filterglas ist nach Vorgabe der zu trennenden Wellenlängen so zu wählen, daß es die Nutzwellenlänge höchstens schwach, die das Nebensprechen verursachende Wellenlänge aber stark absorbiert.

Da das Licht im Lichtleiterstab durch Totalreflexion geführt wird, treten auch bei langen Stäben keine störenden Aufweitungen des Strahlquerschnitts auf.

Ed 1 Sti/13.6.80

Einfügeverlust und Nebensprechdämpfung sind zur Länge des Lichtleiterstabes proportional. Wegen der stark unterschiedlichen Proportionalitätsfaktoren läßt sich bei geringen Einfügeverlusten eine hohe Nebensprechdämpfung erreichen.

Zur Vermeidung von Streuverlusten weist ein vorgeschlagener Lichtleiterstab eine gute Oberflächenqualität auf. Außerdem ist es zur Reduzierung von Streuverlusten zweckmäßig, wenn der Lichtleiterstab von einem Kunststoffmantel umgeben ist.

Bevorzugt wird der Lichtleiterstab an Stellen angeordnet bei denen ein Lichtwellenleiter, beispielsweise eine Glasfaser vor einer lichtempfindlichen Fläche eines optischen Empfängers endet. Der Lichtleiterstab ist dann zwischen dem Lichtwellenleiter und der lichtempfindlichen Fläche des optischen Empfängers anzuordnen.

Dabei ist es zur Vermeidung von Verlusten zweckmäßig, den Durchmesser des Lichtleiterstabes größer als den Durchmesser eines lichtleitenden Querschnitts des Lichtwellenleiters und kleiner als den Durchmesser der lichtempfindlichen Fläche zu wählen.

Der Lichtleiterstab kann aber auch an anderen Stellen, beispielsweise zwischen zwei Lichtwellenleitern angeordnet werden. In diesem Fall ist es zweckmäßig, wenn der Lichtleiterstab selbst ein Glasfaser-Lichtwellenleiter ist, der zwischen den Lichtwellenleitern angeordnet ist.

Bevorzugterweise ist eine Verbindung des Lichtleiterstabes mit einem Lichtwellenleiter und/oder einem Detektor durch optisch transparentem Kitt hergestellt.

0043450

In der Regel wird es zweckmäßig sein, wenn ein vorgeschlagener Lichtleiterstab in Verbindung mit einem bereits
vorgeschlagenen, zur Nebensprechdämpfung eingesetzten
schmalbandigen Farbfilter zur weiteren Erhöhung der
Nebensprechdämpfung eingesetzt wird. In diesem Falle
ist es von Vorteil, wenn ein solches Farbfilter auf
eine Stirnfläche des Lichtleiterstabes aufgebracht ist.
Bevorzugterweise sind auf beiden Stirnflächen des Lichtleiterstabes schmalbandige Farbfilter aufgebracht. Bevorzugt werden dabei schmalbandige Interferenzfilter
benutzt. Diese Filter können wegen ihres Schichtaufbaus
und ihrer Herstellung durch Bedampfen oder Kathodenzerstäubung sehr leicht auf eine Stirnfläche eines Lichtleiterstabes aufgebracht werden.

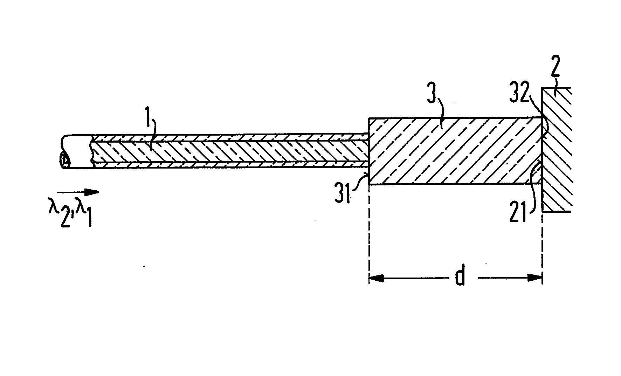

Die Erfindung wird in der nun folgenden Beschreibung
anhand der Figur näher erläutert.

Die Figur zeigt in schematischer Darstellung einen zwischen einem Glasfaserlichtwellenleiter und einer lichtempfindlichen Fläche eines Detektors angeordneten Lichtleiterstab.

Zwischen dem aus einer Kern-Mantel-Glasfaser bestehenden
Lichtwellenleiter 1, der Licht einer Nutzwellenlänge
$\lambda_1$, und einer das Nebensprechen verursachenden störenden Wellenlänge $\lambda_2$ führt und einer lichtempfindlichen
Fläche 21 eines Fotodetektors 2 ist ein zylindrischer
Lichtleiterstab 3 einer vorbestimmten Länge d eingefügt.
Der Lichtleiterstab besteht aus einem Glas, welches
das Nutzlicht der Wellenlänge $\lambda_1$ nur schwach, das
Störlicht der Wellenlänge $\lambda_2$ aber stark absorbiert.
Der Durchmesser des Lichtleiterstabes 3 ist zur Vermeidung von Verlusten größer als der Durchmesser des Kerns
der Glasfaser und kleiner als der Durchmesser der lichtempfindlichen Fläche 21 gewählt. Ein typischer und technologisch ohne weiteres realisierbarer Wert des Durchmessers des Lichtleiterstabes 3 ist 0,5 mm. Der Lichtleiterstab muß nicht exakt kreiszylindrisch sein, wichtig ist jedoch eine gute Oberflächenqualität zur Vermeidung von Streuverlusten. Zur Reduzierung von Streuverlusten kann der Lichtleiterstab 3 auch mit einem Plastikmantel umgeben sein. Die Verbindung des Lichtleiterstabes 3 mit der Glasfaser 1 und der lichtempfindlichen Fläche 21 ist wie beim Klebespleiss von Glasfasern durch optisch transparenten Kitt hergestellt. Da der Lichtleiterstab 3 dicker als die Glasfaser ist, sind beim Verkitten keine engen transversalen Toleranzen einzuhalten.

Eine Variante des in der Figur dargestellten Lichtleiterstabes wird durch Aufbringen von zusätzlichen Schmalbandinterferenzfiltern auf die Stirnflächen 31 und 32 des Lichtleiterstabes 3 erhalten.

Soll der Lichtleiterstab 3 direkt zwischen zwei Lichtwellenleiter, beispielsweise Glasfasern, angeordnet werden, so ist es zweckmäßig, wenn er selbst ein Glasfaser-Lichtwellenleiter ist, der nach Möglichkeit dieselben Querabmessungen wie die Glasfasern aufweist.

Die in der Figur dargestellte Anordnung wurde für die Nutzwellenlänge $\lambda_1$ = 825 nm und die Störwellenlänge $\lambda_2$ = 755 nm realisiert. Für den Lichtleiterstab wurde das Filterglas RG 780 (siehe Katalog Farb- und Filterglas Nr. 3531/2 (1979) der Fa. Jenaer Glaswerk Schott & Gen., Mainz) verwendet. Die Länge d des Stabes betrug 3 mm. Daraus ergibt sich ein Einfügeverlust von 0,044 dB und eine Nebensprechdämpfung von 20 dB. Wird ein Lichtleiterstab des gleichen Filterglases aber der größeren Länge d = 15 mm verwendet, so erhöhen sich die Einfügeverluste nur geringfügig auf 0,22 dB,

0043450
80 P 7103 E

die Nebensprechdämpfung steigt aber auf 100 dB an.

Durch die Verwendung eines optisch transparenten Kitts können die Koppelverluste bei der Ein- und Auskopplung am Lichtleiterstab 3 gering gehalten werden. Sie liegen unter 1 dB.

Abschließend sei darauf hingewiesen, daß die Verwendung von Filtergläsern in Verbindung mit Schmalbandfiltern zum verstärkten Abblocken unerwünschter Spektralbereiche aus der Interferenzfilter-Technologie an sich bekannt ist. Das wesentlich Neue an dem hier vorgeschlagenen Filterelement liegt darin, daß sich das Licht im Filterglas nicht frei ausbreitet, sondern daß das Filterglas in Form eines Lichtleiterstabes ausgebildet ist, in dem das Licht durch Totalreflexion geführt wird.

10 Patentansprüche
1 Figur

0043450

## Patentansprüche

1. Filterelement mit einem Filterglas für die optische Nachrichtentechnik, d a d u r c h  g e k e n n - z e i c h n e t , daß das Filterglas in Form eines Lichtleiterstabes (3) ausgebildet ist.

2. Element nach Anspruch 1, d a d u r c h  g e - k e n n z e i c h n e t , daß der Lichtleiterstab (3) eine gute Oberflächenqualität aufweist.

3. Lichtleiterstab nach Anspruch 1 oder 2, insbesondere nach Anspruch 2, d a d u r c h  g e k e n n z e i c h - n e t , daß der Lichtleiterstab (3) von einem Kunststoffmantel umgeben ist.

4. Element nach einem der vorhergehenden Ansprüche, d a d u r c h  g e k e n n z e i c h n e t , daß der Lichtleiterstab (3) zwischen einem Lichtwellenleiter (1) und einer lichtempfindlichen Fläche (21) eines optischen Empfängers (2) angeordnet ist.

5. Element nach Anspruch 4, d a d u r c h  g e - k e n n z e i c h n e t , daß der Durchmesser des Lichtleiterstabes (3) größer als der Durchmesser eines lichtleitenden Querschnitts des Lichtwellenleiters (1) und kleiner als der Durchmesser der lichtempfindlichen Fläche (21) gewählt ist.

6. Element nach einem der vorhergehenden Ansprüche, d a d u r c h  g e k e n n z e i c h n e t , daß der Lichtleiterstab ein Glasfaser-Lichtwellenleiter ist, der zwischen Lichtwellenleitern angeordnet ist.

0043450

VPA 80 P 7103 E

7. Element nach einem der vorhergehenden Ansprüche, d a d u r c h   g e k e n n z e i c h n e t , daß eine Verbindung des Lichtleiterstabes mit einem Lichtwellenleiter und/oder einem Detektor durch optisch transparenten Kitt hergestellt ist.

8. Element nach einem der vorhergehenden Ansprüche, d a d u r c h   g e k e n n z e i c h n e t , daß ein schmalbandiges Farbfilter auf eine Stirnfläche des Lichtleiterstabes aufgebracht ist.

9. Element nach Anspruch 8, d a d u r c h   g e - k e n n z e i c h n e t , daß auf beiden Stirnflächen des Lichtleiterstabes schmalbandige Farbfilter aufgebracht sind.

10. Element nach Anspruch 8 oder 9, d a d u r c h   g e k e n n z e i c h n e t , daß ein schmalbandiges Farbfilter aus einem schmalbandigen Interferenzfilter besteht.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – A1 – 2 718 785 (WESTERN ELECTRIC) <br> * Ansprüche 5, 6 * <br> -- | 1-3, 6 |
| | DE – A1 – 2 632 861 (SIEMENS AG) <br> * Anspruch 1 * <br> -- | 1-3, 6 |
| | CH – A – 557 605 (SIEMENS AG) <br> * Unteranspruch 2 * <br> -- | 1-3, 6 |
| A | IBM TECHNICAL DISCLOSURE BULLETIN, <br> Band 20, Nr. 9, Februar 1978 <br> F.P. CEFARELLI et al. "Three-Fiber <br> System for Optical Interconnections" <br> Seiten 3571, 3572 <br> -- | 4-6 |
| A | DE – A1 – 2 611 011 (HEINRICH-HERTZ <br> INSTITUT) <br> * Anspruch 16 * <br> -- | 7 |
| A | DE – A1 – 2 843 962 (FELTEN & <br> GUILLEAUME) <br> *Ansprüche 1 bis 3 * <br> -- | 8-10 |
| A | DE – A1 – 2 851 625 (SIEMENS AG) <br> * ganzes Dokument * <br> ---- | |

**KLASSIFIKATION DER ANMELDUNG (int. Cl.3)**

G 02 B 7/26

**RECHERCHIERTE SACHGEBIETE (Int. Cl.3)**

G 02 B 5/20
G 02 B 7/26
H 04 B 9/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 07-10-1981 | FUCHS |

EPA form 1503.1  06.78